# EUROPEAN PATENT SPECIFICATION

(11) **EP 2 413 052 B1**
(45) Date of publication and mention of the grant of the patent: **19.12.2018**
(21) Application number: 09842276.9
(22) Date of filing: 27.03.2009
(51) Int. Cl.: F24F 7/08, F24F 13/08, F24F 12/00, F24F 13/20

(54) **HEAT EXCHANGE VENTILATION DEVICE**
WÄRMEAUSTAUSCHLÜFTUNGSVORRICHTUNG
DISPOSITIF DE VENTILATION ET D'ÉCHANGE DE CHALEUR

(43) Date of publication of application: 01.02.2012
(73) Proprietor: Mitsubishi Electric Corporation, Tokyo 100-8310 (JP)
(72) Inventor: SUZUKI, Masanobu, Tokyo 100-8310 (JP); MORIKAWA, Masaki, Nakatsugawa-shi Gifu 508-0041 (JP); YAMAGUCHI, Masashi, Tokyo 100-8310 (JP); TAKAHASHI, Junichi, Tokyo 100-8310 (JP); UEDA, Masahiro, Tokyo 100-8310 (JP)
(74) Representative: J A Kemp
(86) International application number: PCT/JP2009/056346
(87) International publication number: WO 2010/109662

(56) References cited:
- JP-A- 3 251 634
- JP-A- 3 251 634
- JP-A- 2007 127 391
- JP-A- 2007 127 391

## Description

### TECHNICAL FIELD

The present invention relates to a heat exchange ventilation apparatus that performs heat exchange between supply air and exhaust air via a heat exchanger.

### BACKGROUND ART

Conventionally, a heat exchange ventilation apparatus is disclosed, which includes a heat exchanger arranged on the upper side in a rectangular parallelepiped box-shaped casing, an exhaust air passage arranged on the left side in the casing, and a supply air passage arranged on the right side and in which air is blown intensively to one side of the heat exchanger (for example, see Patent Document 1).

Patent Document 1: Japanese Patent Application Laid-open No. 2003-185213

JP 3 251634 A discloses a feed fan and an exhaust fan which are located approximately on the same axis, and a duct for the feed fan which is also located approximately on the same axis. A duct for the exhaust is extended in a direction parallel to which the partition plates 6 of a heat exchange element are superposed with each other. A distance between the ducts can be set to a low value. This construction also enables reduction of a lateral width of a heat exchange device body. The length of the heat exchange element can be increased in a longitudinal direction of the heat exchanger device, such that the lateral width of the heat exchange device body can be decreased.

### DISCLOSURE OF INVENTION

### PROBLEM TO BE SOLVED BY THE INVENTION

However, in the above-described conventional heat exchange ventilation apparatus, there is a problem in that air is blown intensively to one side of the heat exchanger, so that air is not blown uniformly throughout the heat exchanger and therefore the heat exchange efficiency of the heat exchanger is low. Moreover, there is a problem in that the air speed distribution at the inlet of the heat exchanger becomes non-uniform, so that the maximum air speed increases and therefore the operation sound becomes high and the pressure loss in an air passage is also large.

The present invention is achieved in view of the above, and has an object to obtain a heat exchange ventilation apparatus capable of blowing air uniformly throughout the heat exchanger.

### MEANS FOR SOLVING PROBLEM

In order to solve the aforementioned problem and attain the aforementioned object, a heat exchange ventilation apparatus according to one aspect of the present invention is constructed in such a manner that a supply air passage that suctions outdoor air from an outdoor-side inlet by a supply air blower and supplies to an inside of a room from an indoor-side outlet through a blowing chamber and a supply-air heat exchange passage of a heat exchanger and an exhaust air passage that suctions indoor air from an indoor-side inlet by an exhaust air blower and discharges to an outside of the room from an outdoor-side outlet through an exhaust-air heat exchange passage of the heat exchanger are formed in a casing, and the heat exchange ventilation apparatus includes the blowing chamber is arranged in a middle of the casing and includes an accumulation portion defined by a wall portion of the blowing chamber which is formed by a concave curved surface that is smoothly continuous with a convex curved portion that is configured to accumulate air blown out from the supply air blower and is configured to direct the air to a direction of the heat exchanger and an outlet portion that is continuous with the accumulation portion and has a bell-mouth shape, defined by the wall portion, which is wider towards the heat exchanger. A preferred embodiment is defined in the dependent claim.

### EFFECT OF THE INVENTION

The heat exchange ventilation apparatus according to the present invention has an effect that air can be blown uniformly throughout the heat exchanger.

### BRIEF DESCRIPTION OF DRAWINGS

FIG. 1 is a top view illustrating an inside of an embodiment of a heat exchange ventilation apparatus according to the present invention.
FIG. 2 is a perspective view illustrating the inside of the heat exchange ventilation apparatus in the embodiment.
FIG. 3 is a perspective view illustrating the inside of the heat exchange ventilation apparatus in the embodiment in a direction different from that of FIG. 2.
FIG. 4 is an exploded perspective view of a supply air blower and an outdoor-side partition member of the heat exchange ventilation apparatus in the embodiment.
FIG. 5-1 is a perspective view of the outdoor-side partition member in the embodiment.
FIG. 5-2 is a perspective view of the outdoor-side partition member in the embodiment in a direction different from that of FIG. 5-1.
FIG. 6 is a perspective view illustrating a modified example of the outdoor-side partition member in the embodiment.

### EXPLANATIONS OF LETTERS OR NUMERALS

- 11: Heat exchanger

- 11a: Supply-air heat exchange passage
- 11b: Exhaust-air heat exchange passage
- 12a: Supply air filter
- 12b: Exhaust air filter
- 13: Casing
- 13a: Outdoor-side side plate
- 13b: Indoor-side side plate
- 14: Indoor-side partition member
- 15: Outdoor-side partition member
- 15a: Leading edge portion
- 15b: Suction chamber
- 15c: Blowing chamber
- 15d: Chamber outlet
- 15e: Concave curved surface
- 15f: One side portion
- 15g: Convex curved portion
- 15h: Accumulation portion
- 15i: Outlet portion
- 15s: Straightening plate
- 16: Supply air blower
- 17: Exhaust air blower
- 21: Outdoor-side inlet
- 22: Supply air passage
- 23: Indoor-side outlet
- 25: Indoor-side inlet
- 26: Exhaust air passage
- 27: Outdoor-side outlet
- 31: Maintenance panel
- 33: Top plate
- 90: Heat exchange ventilation apparatus

### BEST MODE(S) FOR CARRYING OUT THE INVENTION

An exemplary embodiment of a heat exchange ventilation apparatus according to the present invention will be explained below in detail based on the drawings. This invention is not limited to this embodiment.

### Embodiment

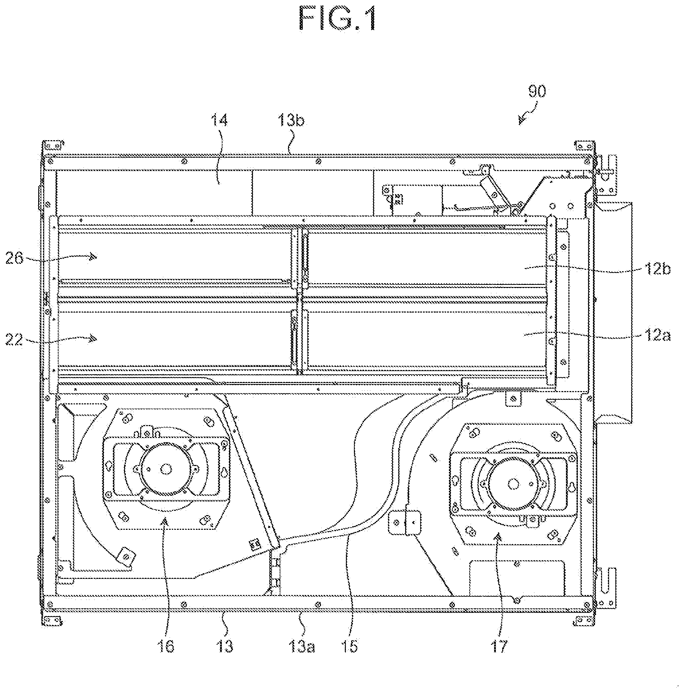

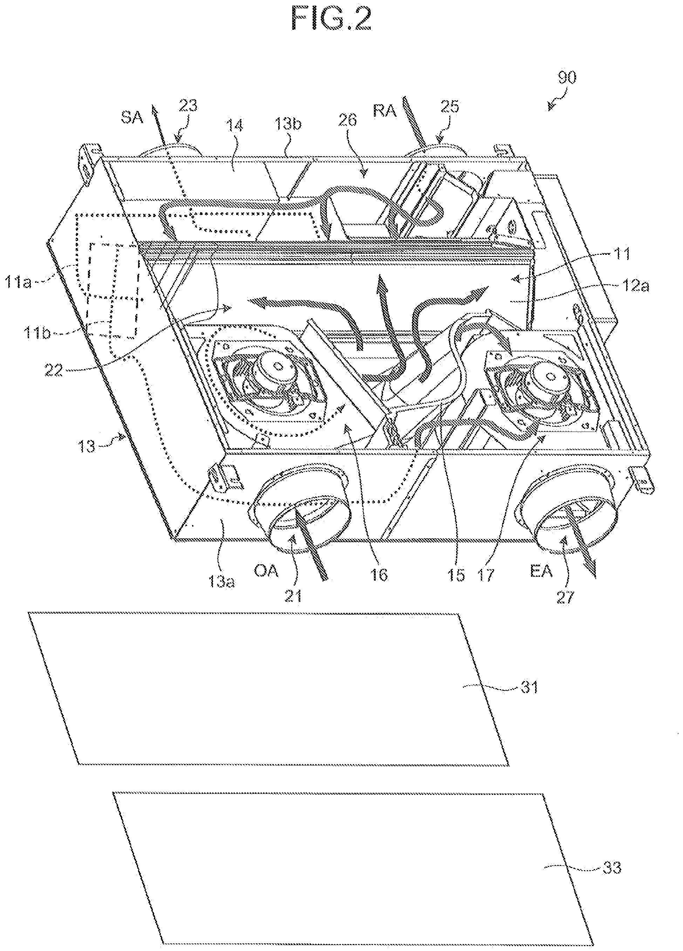

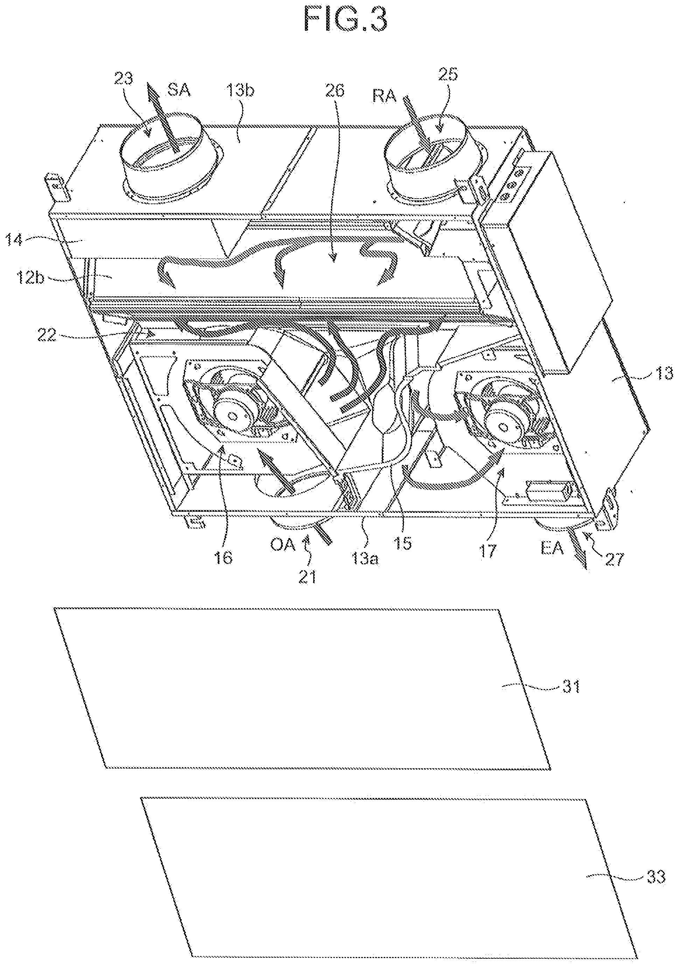

FIG. 1 is a top view illustrating an inside of an embodiment of a heat exchange ventilation apparatus according to the present invention, FIG. 2 is a perspective view illustrating the inside of the heat exchange ventilation apparatus in the embodiment, and FIG. 3 is a perspective view illustrating the inside of the heat exchange ventilation apparatus in the embodiment in a direction different from that of FIG. 2.

As shown in FIG. 1 to FIG. 3, a heat exchange ventilation apparatus 90 in the embodiment is provided with a heat exchanger 11, which performs heat exchange between outdoor air and indoor air, in a casing 13 formed into a rectangular parallelepiped box shape and performs ventilation inside a room while performing heat exchange by supplying air and exhausting air simultaneously.

In the heat exchange ventilation apparatus 90, a supply air passage 22, which suctions outdoor air (OA: Outdoor Air) from an outdoor-side inlet 21 by a supply air blower 16 and supplies air (SA: Supply Air) from an indoor-side outlet 23 to the inside of a room through a supply-air heat exchange passage 11a of the heat exchanger 11, and an exhaust air passage 26, which suctions indoor air (RA: Return Air) from an indoor-side inlet 25 by an exhaust air blower 17 and exhausts air (EA: Exhaust Air) from an outdoor-side outlet 27 to the outside of the room through an exhaust-air heat exchange passage 11b of the heat exchanger 11, are formed. At the inlet of the supply-air heat exchange passage 11a, a supply air filter 12a is arranged, and, at the inlet of the exhaust-air heat exchange passage 11b, an exhaust air filter 12b is arranged.

The heat exchanger 11, an indoor-side partition member 14, an outdoor-side partition member 15, the supply air blower 16, and the exhaust air blower 17 are arranged in the casing 13, so that the supply air passage 22 and the exhaust air passage 26 are formed. The supply air blower 16 is arranged in the left corner on the outdoor side of the casing 13 and the exhaust air blower 17 is arranged in the right corner on the outdoor side. After arranging these devices, the outdoor side (the blowers arranged side) of the casing 13 is covered by a top plate 33 and the indoor side (the heat exchanger 11 arranged side) is covered by a maintenance panel 31.

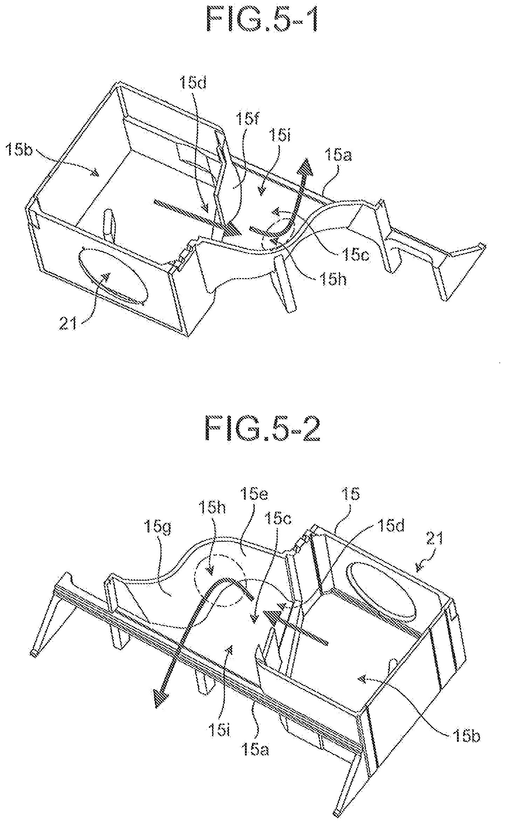

The heat exchanger 11 formed into a quadrangular prism shape is arranged across substantially the entire width of the casing 13 in parallel with an indoor-side side plate 13b on a side closer to the indoor-side side plate 13b in the casing 13, a square lower-side corner portion of the heat exchanger 11 is brought into contact with the bottom plate of the casing 13, and an upper-side corner portion opposing the lower-side corner portion is brought into contact with the maintenance panel 31 that covers the indoor side of the casing 13. Moreover, an indoor-side corner portion of the heat exchanger 11 is brought into contact with the indoor-side partition member 14 and an outdoor-side corner portion is brought into contact with a leading edge portion 15a (see FIG. 5-1) of the outdoor-side partition member 15.

The supply air passage 22 is formed as an air passage that passes through, in turn, the outdoor-side inlet 21 provided in an outdoor-side side plate 13a of the casing 13, the inside of the supply air blower 16, the upper side of the outdoor-side partition member 15, the supply air filter 12a, the supply-air heat exchange passage 11a, the lower side of the indoor-side partition member 14, and the indoor-side outlet 23 provided in the indoor-side side plate 13b.

On the other hand, the exhaust air passage 26 is formed as an air passage that passes through, in turn, the indoor-side inlet 25 provided in the indoor-side side plate 13b of the casing 13, the side of the indoor-side partition member 14, the exhaust air filter 12b, the exhaust-air heat exchange passage 11b, the lower side of the outdoor-side partition member 15, the inside of the exhaust air blower 17, and the outdoor-side outlet 27 provided in the outdoor-side side plate 13a of the casing 13.

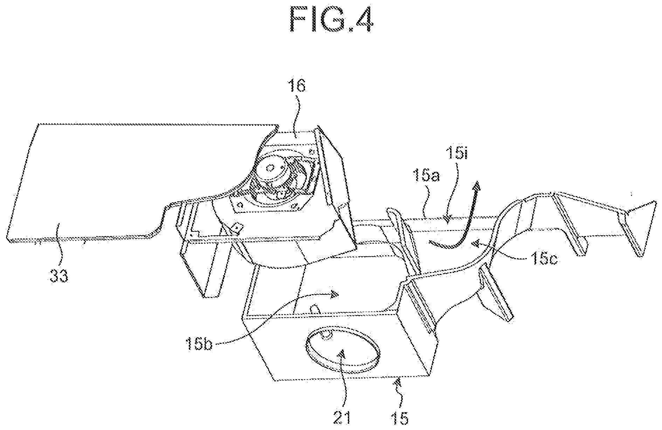

FIG. 4 is an exploded perspective view of the supply air blower and the outdoor-side partition member of the heat exchange ventilation apparatus in the embodiment, FIG. 5-1 is a perspective view of the outdoor-side partition member in the embodiment, and FIG. 5-2 is a perspective view of the outdoor-side partition member in the embodiment in a direction different from that of FIG. 5-1.

As shown in FIG. 4 to FIG. 5-2, in the upper side of the outdoor-side partition member 15, a suction chamber 15b, which is arranged in the left corner on the outdoor side of the casing 13, accommodates the supply air blower 16, and supplies outside air suctioned from the outdoor-side inlet 21 to the supply air blower 16, a blowing chamber 15c, which supplies outside air blown out from the supply air blower 16 to the heat exchanger 11, and a chamber outlet 15d, which communicates between the outlet of the supply air blower 16 and the blowing chamber 15c, are formed.

The blowing chamber 15c is arranged in the middle of a casing 13 between the supply air blower 16 and the exhaust air blower 17, is closed on the outdoor side (back portion), and has an outlet portion 15i that widens in a bell-mouth shape toward the heat exchanger 11. The chamber outlet 15d is provided in one side portion of the closed back portion of the blowing chamber 15c and the other side portion (wall portion) of the back portion becomes a concave curved surface 15e. An one side portion (wall portion) 15f on the outlet portion 15i side of the blowing chamber 15c widens toward the left side in FIG. 5-1 and the other side portion (wall portion) becomes a convex curved portion 15g that is smoothly continuous with the concave curved surface 15e of the back portion and widens largely toward the right side in FIG. 5-1. The back portion of the blowing chamber 15c becomes an accumulation portion 15h of blown out air.

The air blown out from the chamber outlet 15d impinges on the concave curved surface 15e of the back portion of the blowing chamber 15c, is accumulated in the accumulation portion 15h of the back portion, and is directed in the heat exchanger 11 direction, the pressure is converted from dynamic pressure into static pressure by the bell-mouth shape of the outlet portion 15i in which the passage cross-sectional area widens, and the air speed distribution at the inlet portion is uniformed over the whole length of the heat exchanger 11. Therefore, the heat exchange efficiency of the heat exchanger 11 can be improved. Moreover, the air speed distribution in the supply-air heat exchange passage 11a of the heat exchanger 11 is uniformed and thus the maximum air speed is lowered, so that the operation sound is reduced.

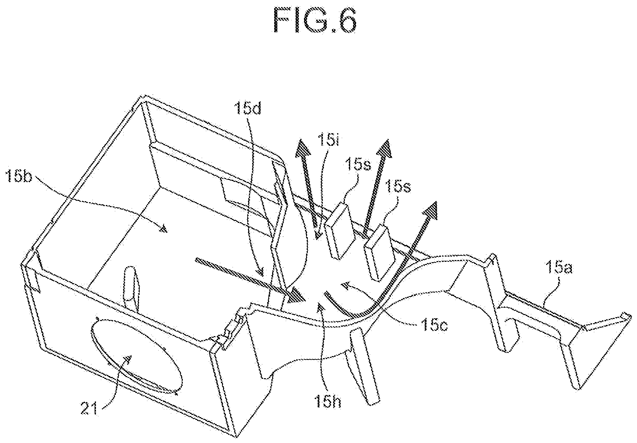

FIG. 6 is a perspective view illustrating a modified example of the outdoor-side partition member in the embodiment. In the outdoor-side partition member 15 in the modified example, two fin-shaped straightening plates 15s that straightens the airflow are provided at the outlet portion 15i of the blowing chamber 15c. With the straightening plates 15s, the air speed distribution at the inlet portion of the heat exchanger 11 can be further uniformed.

Moreover, even if the straightening plates 15s are directed perpendicular to the airflow direction to be baffles, the air speed distribution at the inlet portion of the heat exchanger 11 can be uniformed. Furthermore, a punching metal or a filter can be arranged at the outlet portion 15i of the blowing chamber 15c. Moreover, a plurality of kinds among the straightening plate 15s, the baffle, the punching metal, and the filter can be arranged.

In the heat exchange ventilation apparatus 90 explained above, the supply air blower 16 and the supply air passage 22, and the exhaust air blower 17 and the exhaust air passage 26 can be interchanged.

### INDUSTRIAL APPLICABILITY

As described above, the heat exchange ventilation apparatus according to the present invention is useful as an apparatus with high heat exchange efficiency and low noise.

## Claims

1. A heat exchange ventilation apparatus (90) in which a supply air passage (22) that suctions outdoor air from an outdoor-side inlet (21) by a supply air blower (16) and supplies to an inside of a room from an indoor-side outlet (23) through a blowing chamber (15c) and a supply-air heat exchange passage (11a) of a heat exchanger (11) and an exhaust air passage (26) that suctions indoor air from an indoor-side inlet (25) by an exhaust air blower (17) and discharges to an outside of the room from an outdoor-side outlet (27) through an exhaust-air heat exchange passage (11b) of the heat exchanger (11) are formed in a casing (13), wherein
the blowing chamber (15c) is arranged in a middle of the casing (13) and includes an accumulation portion (15h) defined by a wall portion of the blowing chamber (15c) which is formed by a concave curved surface (15e) that is smoothly continuous with a convex curved portion (15g)that is configured to accumulate air blown out from the supply air blower (16) and is configured to direct the air to a direction of the heat exchanger (11) and an outlet portion (15i) that is continuous with the accumulation portion (15h) and has a bell-mouth shape, defined by the wall portion, which is wider towards the heat exchanger (11).

2. The heat exchange ventilation apparatus (90) according to claim 1, wherein any one of or a plurality of kinds among a straightening plate (15s), a baffle, a punching metal, and a filter is arranged at the outlet portion (15i)of the blowing chamber.

## Patentansprüche

1. Wärmeaustausch-Belüftungsvorrichtung (90), in der ein Zuluftkanal (22), der Außenluft aus einem äußeren Einlass (21) durch ein Zuluftgebläse (16) saugt und einer Innenseite eines Raums aus einem inneren Auslass (23) durch eine Blaskammer (15c) und einen Zuluft-Wärmeaustauschkanal (11a) eines Wärmetauschers (11) zuführt, und ein Abluftkanal (26), der Innenluft aus einem inneren Einlass (25) durch ein Abluftgebläse (17) saugt und an eine Außenseite des Raums aus einem äußeren Auslass (27) durch einen Abluft-Wärmeaustauschkanal (11b) des Wärmetauschers (11) ausstößt, in einem Gehäuse (13) gebildet sind, wobei
die Blaskammer (15c) in einer Mitte des Gehäuses (13) angeordnet ist und einen Sammelabschnitt (15h), der durch einen Wandabschnitt der Blaskammer (15c) definiert ist, der durch eine konkav gekrümmte Oberfläche (15e) gebildet wird, die glatt durchgehend mit einem konvex gekrümmten Abschnitt (15g) ist, der konfiguriert ist, aus dem Zuluftgebläse (16) geblasene Luft zu sammeln, und konfiguriert ist, die Luft zu einer Richtung des Wärmetauschers (11) zu leiten, und einen Auslassabschnitt (15i), der mit dem Sammelabschnitt (15h) durchgehend ist und eine trompetenförmige Gestalt aufweist, der durch den Wandabschnitt definiert ist, der zu dem Wärmetauscher (11) hin breiter ist, beinhaltet.

2. Wärmeaustausch-Belüftungsvorrichtung (90) nach Anspruch 1, wobei ein beliebiges oder eine Vielzahl von Arten aus einer Richtplatte (15s), einem Prallblech, einem Stanzmetall und einem Filter an dem Auslassabschnitt (15i) der Blaskammer angeordnet ist.

## Revendications

1. Appareil de ventilation à échange thermique (90) dans lequel un passage d'air d'alimentation (22) qui aspire l'air extérieur depuis une entrée côté extérieur (21) par une soufflante d'air d'alimentation (16) et fournit vers l'intérieur d'une pièce depuis une sortie côté intérieur (23) par une chambre de soufflage (15c) et un passage d'air d'alimentation d'échange thermique (11a) d'un échangeur thermique (11) et un passage d'air d'évacuation (26) qui aspire l'air intérieur depuis une entrée côté intérieur (25) par une soufflante d'air d'évacuation (17) et évacue vers un côté extérieur de la pièce depuis une sortie côté extérieur (27) par un passage d'air d'évacuation d'échange thermique (11b) de l'échangeur thermique (11) sont formés dans un boîtier (13),
la chambre de soufflage (15c) étant disposée au milieu du boîtier (13) et comprenant une partie d'accumulation (15h) définie par une partie de paroi de la chambre de soufflage (15c) qui est formée par une surface incurvée concave (15e) qui est continue et souple avec une partie incurvée convexe (15g) qui est conçue pour accumuler l'air soufflé depuis la soufflante à air d'alimentation (16) et est conçue pour diriger l'air vers une direction de l'échangeur thermique (11) et une partie de sortie (15i) qui est continue avec la partie d'accumulation (15h) et présente une forme de pavillon, définie par la partie de paroi, qui est plus élargie vers l'échangeur thermique (11).

2. Appareil de ventilation à échange thermique (90) selon la revendication 1, dans lequel un quelconque élément ou une pluralité de sortes parmi une plaque de redressement (15s), un déflecteur, un métal de poinçonnage et un filtre sont agencés au niveau de la partie de sortie (15i) de la chambre de soufflage.
